# EUROPEAN PATENT APPLICATION

(11) **EP 4 406 994 A1**
(43) Date of publication of application: **31.07.2024**
(21) Application number: 22873010.7
(22) Date of filing: 22.09.2022
(51) Int. Cl.: C08J 5/24, C08F 8/48, C08F 16/38, C08G 59/00, C08K 7/06, C08L 29/14, C08L 63/00

(54) **CARBON-FIBER-REINFORCED COMPOSITE MATERIAL AND METHOD FOR PRODUCING CARBON-FIBER-REINFORCED COMPOSITE MATERIAL**

(30) Priority: 24.09.2021 JP 2021155979; 24.03.2022 JP 2022048658
(71) Applicant: SEKISUI CHEMICAL CO., LTD., Osaka-shi, Osaka 530-0047 (JP)
(72) Inventor: YOSHIDA, Haruka, Koka-shi, Shiga 528-8585 (JP); OOTA, Ayako, Koka-shi, Shiga 528-8585 (JP)
(74) Representative: Cabinet Beau de Loménie
(86) International application number: PCT/JP2022/035485
(87) International publication number: WO 2023/048259

(57) **Abstract**

The present invention provides a carbon-fiber-reinforced composite material having excellent tackiness, excellent compatibility with epoxy resins, and excellent interfacial adhesion while being capable of achieving high mechanical strength, and a method for producing a carbon-fiber-reinforced composite material. Provided is a carbon-fiber-reinforced composite material containing: carbon fibers; an epoxy resin; a curing agent; and a polyvinyl acetal resin, the polyvinyl acetal resin including structural units represented by the following formula (1), each R¹ in the formula (1) being an alkyl group having a carbon number of 1 or greater: 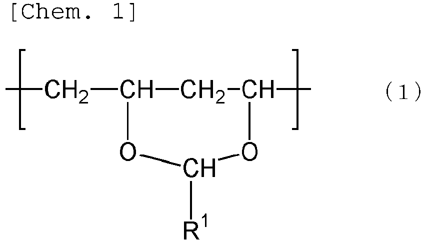 wherein R¹s may be the same as or different from each other.

## Description

### TECHNICAL FIELD

The present invention relates to carbon-fiber-reinforced composite materials and methods for producing carbon-fiber-reinforced composite materials.

### BACKGROUND ART

Fiber-reinforced plastics, a type of fiber-reinforced composite material, have light weight, high strength, and high rigidity, and thus have found a wide range of applications from structural material applications such as aircraft, automobiles, and ships to general sports applications such as tennis rackets, fishing rods, and golf shafts. One method to produce fiber-reinforced plastics is to use a prepreg, an intermediate material formed by impregnating a reinforcing material made of long fibers (continuous fibers), such as reinforcing fibers, with a matrix resin. This method advantageously enables easy control of the reinforcing-fiber content in the fiber-reinforced plastics, while enabling designing the content to be higher.

Epoxy resins are suitable as matrix resins for such fiber-reinforced composite materials because of their excellent moldability. The use of epoxy resins enables the production of fiber-reinforced composite materials having excellent mechanical properties and excellent heat resistance even after curing. Epoxy resins are thus used in a wide range of industries.

For example, Patent Literature 1 discloses a prepreg containing reinforcing fibers, an epoxy resin, a carboxy group-containing polyvinyl formal resin, and an amine curing agent, each in a predetermined amount.

Patent Literature 2 discloses a prepreg for fiber-reinforced composite materials. The prepreg contains an epoxy resin, a thermoplastic resin soluble in the epoxy resin, and a latent curing agent, each in a predetermined amount.

Patent Literature 3 discloses a prepreg obtained by impregnating reinforcing fibers with an epoxy resin composition containing an epoxy compound, a curing agent, and a polyvinyl acetal resin.

### CITATION LIST

### - Patent Literature

Patent Literature 1: WO 2019/202762
Patent Literature 2: JP H06-9802 A
Patent Literature 3: JP H05-186667 A

### SUMMARY OF INVENTION

### - Technical problem

However, even with the techniques disclosed in Patent Literatures 1 to 3, the resulting prepreg may have insufficient tackiness (surface tackiness), which may decrease the handleability.

The resulting prepreg may also have poor interfacial adhesion between the reinforcing fibers and the matrix resin and fail to provide sufficient performance.

Moreover, the resulting prepreg may have insufficient toughness, which may decrease the mechanical strength.

In view of the situation in the art, the present invention aims to provide a carbon-fiber-reinforced composite material having excellent tackiness, excellent compatibility with epoxy resins, and excellent interfacial adhesion while being capable of achieving high mechanical strength, and a method for producing a carbon-fiber-reinforced composite material.

### - Solution to problem

The present disclosure (1) relates to a carbon-fiber-reinforced composite material containing: carbon fibers; an epoxy resin; a curing agent; and a polyvinyl acetal resin, the polyvinyl acetal resin including structural units represented by the following formula (1), each R¹ in the formula (1) being an alkyl group having a carbon number of 1 or greater. 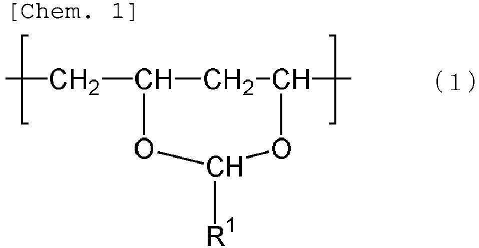 In the formula (1), R¹s may be the same as or different from each other.

The present disclosure (2) relates to the carbon-fiber-reinforced composite material according to the present disclosure (1), wherein in the polyvinyl acetal resin, R¹s in the formula (1) comprise an alkyl group having a carbon number of 1 or greater and/or an alkyl group having a carbon number of 3 or greater.

The present disclosure (3) relates to the carbon-fiber-reinforced composite material according to the present disclosure (1) or (2), wherein the polyvinyl acetal resin has a hydroxy group content of 15.0 mol% or more and 45.0 mol% or less.

The present disclosure (4) relates to the carbon-fiber-reinforced composite material according to any one of the present disclosures (1) to (3), wherein the polyvinyl acetal resin has an average degree of polymerization of 2,500 or less.

The present disclosure (5) relates to the carbon-fiber-reinforced composite material according to any one of the present disclosures (1) to (4), wherein the polyvinyl acetal resin has a glass transition temperature of 75°C or higher.

The present disclosure (6) relates to the carbon-fiber-reinforced composite material according to any one of the present disclosures (1) to (5), wherein the polyvinyl acetal resin includes a structural unit containing an acid-modified group.

The present disclosure (7) relates to the carbon-fiber-reinforced composite material according to the present disclosure (6), wherein in the polyvinyl acetal resin, the structural unit containing an acid-modified group is contained in an amount of 0.01 to 20 mol%.

The present disclosure (8) relates to the carbon-fiber-reinforced composite material according to any one of the present disclosures (1) to (7), wherein the polyvinyl acetal resin has a hydroxy group content of 16.0 mol% or more and 45.0 mol% or less.

The present disclosure (9) relates to the carbon-fiber-reinforced composite material according to any one of the present disclosures (1) to (8), wherein the polyvinyl acetal resin is contained in an amount of 0.01 parts by weight or more and 40.0 parts by weight or less relative to 100 parts by weight of the epoxy resin.

The present disclosure (10) relates to a method for producing a carbon-fiber-reinforced composite material, including at least the steps of: forming a resin composition containing an epoxy resin, a curing agent, and a polyvinyl acetal resin; and forming a composite of the resin composition with carbon fibers, the polyvinyl acetal resin including structural units represented by the following formula (1), each R¹ in the formula (1) being an alkyl group having a carbon number of 1 or greater.

The present invention is described in detail below.

As a result of extensive studies, the present inventors have found out that a carbon-fiber-reinforced composite material containing a polyvinyl acetal resin having a predetermined structure can have excellent tackiness, excellent compatibility with epoxy resins, and excellent interfacial adhesion while being capable of achieving high mechanical strength. The inventors thus completed the present invention.

The carbon-fiber-reinforced composite material of the present invention contains a polyvinyl acetal resin.

The polyvinyl acetal resin includes structural units represented by the following formula (1). Each R¹ in the formula (1) is an alkyl group having a carbon number of 1 or greater.

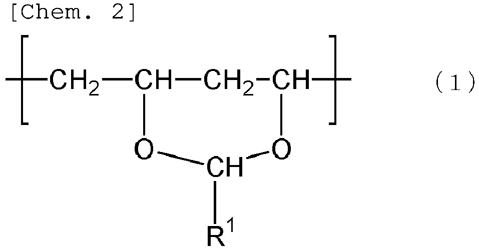

In the formula (1), R¹s may be the same as or different from each other.

In the formula (1), each R¹ is an alkyl group having a carbon number of 1 or greater.

With the alkyl group having carbon number of 1 or greater, the carbon fiber composite material can advantageously have improved toughness and excellent shock resistance. The carbon number is preferably 1 or greater and 6 or less. In particular, R¹s in the formula (1) preferably include an alkyl group having a carbon number of 1 or greater and/or an alkyl group having a carbon number of 3 or greater.

R¹s may be the same or a combination of different groups.

When R¹s are a combination of different groups, preferred is a combination of an alkyl group having a carbon number of 1 or greater and an alkyl group having a carbon number of 3 or greater.

The alkyl group may be any alkyl group having a carbon number of 1 or greater. Examples include methyl, ethyl, n-propyl, isopropyl, n-butyl, iso-butyl, sec-butyl, and tert-butyl groups. Examples also include pentyl, hexyl, heptyl, 2-ethylhexyl, octyl, nonyl, decyl, undecyl, dodecyl, tridecyl, tetradecyl, pentadecyl, and octadecyl groups. Preferred among these are methyl and n-propyl groups.

In the polyvinyl acetal resin, the lower limit of the amount of the acetal group-containing structural unit represented by the formula (1) (hereinafter the amount is also referred to as an "alkyl acetal group content") is preferably 30 mol%, and the upper limit thereof is preferably 85 mol%.

When the alkyl acetal group content is 30 mol% or more, the polyvinyl acetal resin can have excellent toughness. When the acetal group content is 85 mol% or less, the compatibility with epoxy resins can be improved.

The lower limit of the alkyl acetal group content is more preferably 60 mol%, and the upper limit thereof is more preferably 80 mol%.

The alkyl acetal group content herein is calculated by counting structural units with two hydroxy groups having been alkyl-acetalized, because an acetal group in the polyvinyl acetal resin is obtained by acetalizing two hydroxy group-containing structural units in a polyvinyl alcohol resin.

In the polyvinyl acetal resin, when R¹s in the formula (1) include a methyl group, the lower limit of the amount of the structural unit wherein R¹ is a methyl group (hereinafter the amount is also referred to as a "degree of acetoacetalization") is preferably 5 mol%, and the upper limit thereof is preferably 85 mol%. When the amount is within the range, the compatibility with epoxy resins can be maintained, and excellent viscosity properties can be obtained.

In the polyvinyl acetal resin, when R¹s in the formula (1) include a n-propyl group, the lower limit of the amount of the structural unit wherein R¹ is a n-propyl group (hereinafter the amount is also referred to as a "degree of butyralization") is preferably 0.1 mol%, and the upper limit thereof is preferably 80 mol%. When the amount is within the range, the compatibility with epoxy resins can be maintained, and excellent viscosity properties can be obtained.

In the polyvinyl acetal resin, when R¹s in the formula (1) include both a methyl group and a n-propyl group, the ratio of the degree of acetoacetalization to the degree of butyralization [degree of acetoacetalization/degree of butyralization] is preferably 0.06 or greater and 850 or less. The ratio is more preferably 0.1 or greater and 375 or less.

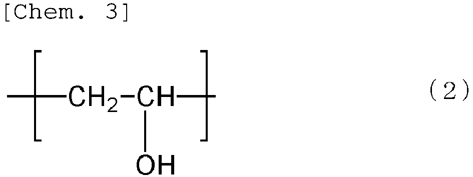

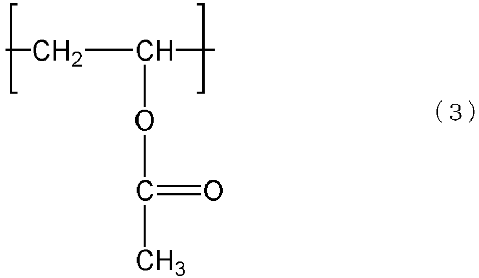

In the polyvinyl acetal resin, the lower limit of the amount of a hydroxy group-containing structural unit represented by the formula (2) (hereinafter the amount is also referred to as a "hydroxy group content") is preferably 15.0 mol%, and the upper limit thereof is preferably 45.0 mol%.

When the hydroxy group content is 15.0 mol% or more, the polyvinyl acetal resin can have excellent adhesiveness. When the hydroxy group content is 45.0 mol% or less, the compatibility with epoxy resins can be sufficiently improved.

The lower limit of the hydroxy group content is more preferably 16.0 mol%, still more preferably 18.0 mol%, further preferably 20.0 mol%, and the upper limit thereof is more preferably 40.0 mol%, still more preferably 38.0 mol%.

In the polyvinyl acetal resin, the lower limit of the amount of an acetyl group-containing structural unit represented by the formula (3) (hereinafter the amount is also referred to as an "acetyl group content") is preferably 0.1 mol%, and the upper limit thereof is preferably 25 mol%.

When the acetyl group content is 0.1 mol% or more, a viscosity increase due to intramolecular or intermolecular hydrogen bonds in the polyvinyl acetal resin can be suppressed. When the acetyl group content is 25 mol% or less, the handleability can be improved without an excessive decrease in the heat resistance of the polyvinyl acetal resin.

The lower limit of the acetyl group content is more preferably 0.5 mol%, and the upper limit thereof is more preferably 15 mol%. The lower limit is still more preferably 0.8 mol%, and the upper limit is still more preferably 14 mol%.

The polyvinyl acetal resin preferably has a sum of the alkyl acetal group content, the hydroxy group content, and the acetyl group content of more than 95 mol%, more preferably 96 mol% or more.

The polyvinyl acetal resin preferably includes a structural unit containing an acid-modified group.

When the polyvinyl acetal resin includes the structural unit containing an acid-modified group, the polyvinyl acetal resin can have improved compatibility with epoxy resins, which can improve the toughness of the resulting carbon-fiber-reinforced composite material. The polyvinyl acetal resin can also have improved adhesion to carbon fibers, thus suppressing separation between the matrix resin and the carbon fibers in the carbon-fiber-reinforced composite material. This can contribute to reduced defects and improved mechanical strength.

Examples of the acid-modified group include a carboxy group, a sulfonic acid group, a maleic acid group, a sulfinic acid group, a sulfenic acid group, a phosphoric acid group, a phosphonic acid group, and their salts.

The structural unit containing an acid-modified group may have a structure in which two acid-modified groups are bonded to the same carbon atom constituting the main chain or a structure in which one acid-modified group is bonded to a carbon atom constituting the main chain.

The acid-modified group may be bonded to the carbon atom constituting the main chain directly or via a linking group such as an alkylene group.

The acid-modified group may be bonded to a carbon atom constituting an acetal group.

In the case where the structural unit containing an acid-modified group has a structure in which an acid-modified group is bonded to a carbon atom constituting the main chain via an alkylene group, the alkylene group is preferably a C1-C10 alkylene group, more preferably a C1-C5 alkylene group, still more preferably a C1-C3 alkylene group.

Examples of the C1-C10 alkylene group include linear alkylene groups, branched alkylene groups, and cyclic alkylene groups.

Examples of the linear alkylene groups include methylene, vinylene, n-propylene, tetramethylene, pentamethylene, hexamethylene, octamethylene, and decamethylene groups.

Examples of the branched alkylene groups include methyl methylene, methyl ethylene, 1-methyl pentylene, and 1,4-dimethyl butylene groups.

Examples of the cyclic alkylene groups include cyclopropylene, cyclobutylene, and cyclohexylene groups.

Preferred among these are linear alkylene groups, more preferred are methylene, vinylene, and n-propylene groups, and still more preferred are methylene and vinylene groups.

When the acid-modified group is a carboxy group, examples of a structural unit containing a carboxy group include a structural unit represented by the following formula (4-1), a structural unit represented by the following formula (4-2), and a structural unit represented by the following formula (4-3).

### [Chem. 4]

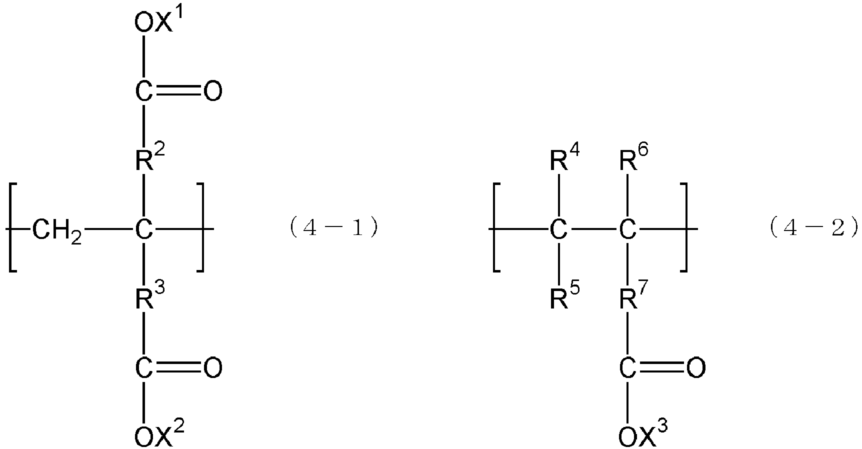

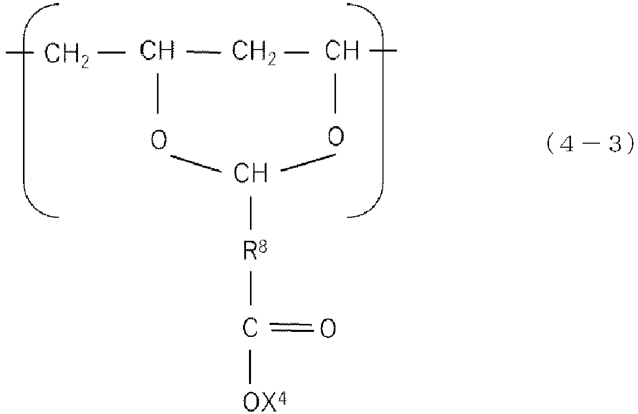

In the formula (4-1), R² and R³ each independently represent a C0-C10 alkylene group, and X¹ and X² each independently represent a hydrogen atom, a metal atom, or a methyl group. In the formula (4-2), R⁴, R⁵, and R⁶ each independently represent a hydrogen atom or a C1-C10 alkyl group, R⁷ represents a C0-C10 alkylene group, and X³ represents a hydrogen atom, a metal atom, or a methyl group. R², R³, or R⁷ representing an alkylene group having a carbon number of 0 is a single bond. In the formula (4-3), R⁸ represents a C0-C10 alkylene group, and X⁴ is a hydrogen atom, a metal atom, or a methyl group.

A carbon number of 0 means the absence of an alkylene group, in other words, a direct bond without an alkylene group.

When at least either X¹ or X² is a metal atom, examples of the metal atom include a sodium atom, a lithium atom, and a potassium atom. Preferred among these is a sodium atom.

The polyvinyl acetal resin preferably includes a structural unit represented by the formula (4-1).

When the polyvinyl acetal resin includes a structural unit represented by the formula (4-1), the polyvinyl acetal resin can have better compatibility with epoxy resins.

When X³ is a metal atom, examples of the metal atom include a sodium atom, a lithium atom, and a potassium atom. Preferred among these is a sodium atom. The same applies when X⁴ is a metal atom.

In the polyvinyl acetal resin, the lower limit of the amount of the structural unit containing an acid-modified group (hereinafter the amount is also referred to as an "acid-modified group content") is preferably 0.01 mol%, and the upper limit thereof is preferably 20 mol%.

When the acid-modified group content is 0.01 mol% or more, the effect of the polyvinyl acetal resin having acid-modified groups can be sufficiently exhibited, which can further improve the adhesiveness of the resulting carbon-fiber-reinforced composite material. When the acid-modified group content is 20 mol% or less, the tackiness and toughness of the carbon-fiber-reinforced composite material can be further improved. The lower limit of the acid-modified group content of the polyvinyl acetal resin is more preferably 0.05 mol%, and the upper limit thereof is more preferably 15 mol%. The lower limit is still more preferably 0.1 mol%, and the upper limit is still more preferably 10 mol%.

The acid-modified group content of the polyvinyl acetal resin herein means the percentage of the structural unit containing an acid-modified group in the total amount of the structural units constituting the polyvinyl acetal resin.

The polyvinyl acetal resin preferably has an average degree of polymerization of 2,500 or less.

When the average degree of polymerization is 2,500 or less, the polyvinyl acetal resin can impart sufficient mechanical strength. When the average degree of polymerization is 1,000 or less, the polyvinyl acetal resin can have sufficiently improved solubility in an organic solvent and thus have better application properties and better dispersibility.

The lower limit of the average degree of polymerization is more preferably 150, and the upper limit thereof is more preferably 1,000.

The average degree of polymerization is the same as the degree of polymerization of a raw material polyvinyl alcohol resin. The average degree of polymerization of the raw material polyvinyl alcohol resin can be measured in conformity with JIS K6726-1994.

The polyvinyl acetal resin preferably has a glass transition temperature (Tg) of 75°C or higher.

When the glass transition temperature is 75°C or higher, the heat resistance can be improved, while the amount of bleeding during impregnation can be reduced. The lower limit of the glass transition temperature is preferably 80°C. The upper limit of the glass transition temperature is not limited but it is preferably 115°C.

The glass transition temperature can be measured using a differential scanning calorimeter (DSC).

When an epoxy resin is added to the polyvinyl acetal resin and the resins are heated for dissolution to obtain a mixed state, the lower limit of the viscosity in the mixed state measured at 30°C using a rheometer is preferably 30 Pa.s, and the upper limit thereof is preferably 1,200 Pa.s. The mixing ratio by weight between the epoxy resin and the polyvinyl acetal resin is 9:1.

When the ratio is within the range, appropriate tackiness can be maintained after impregnation into carbon fibers, which can improve the handleability.

When an epoxy resin is added to the polyvinyl acetal resin and the resins are heated for dissolution to obtain a mixed state, the lower limit of the viscosity in the mixed state measured at 90°C using a rheometer is preferably 0.1 Pa.s, and the upper limit thereof is preferably 4.5 Pa.s.

When the ratio is within the range, an optimal viscosity can be obtained in impregnation into the carbon fibers, which can reduce the occurrence of voids.

In the polyvinyl acetal resin, the lower limit of the ratio of the viscosity at 30°C to the viscosity at 90°C (viscosity at 30°C /viscosity 90°C) is preferably 6.5, and the upper limit thereof is preferably 12,000. The ratio within the range makes it possible to produce a tough carbon-fiber-reinforced composite material with excellent tackiness and a low occurrence of voids.

The viscosity means a viscosity measured at 30°C or 90°C by adding 10 parts by weight of the polyvinyl acetal resin to 90 parts by weight of the epoxy resin, heating them at 150°C for dissolution, and subjecting the resulting sample to measurement using a rheometer with, for example, 20-mm parallel plates at a temperature decrease rate of 5°C/min, a rotation rate of 100 rpm, and a gap of 500 um.

The epoxy resin and thermoplastic resin used in the viscosity measurement means the epoxy resin and the thermoplastic resin contained in the carbon-fiber-reinforced composite material.

The amount of the polyvinyl acetal resin in the carbon-fiber-reinforced composite material of the present invention is preferably 0.01 parts by weight or more and 40.0 parts by weight or less relative to 100 parts by weight of the epoxy resin. When the amount of the polyvinyl acetal resin is within the range, the mechanical strength of the resulting carbon-fiber-reinforced composite material can be sufficiently enhanced.

The amount of the polyvinyl acetal resin in the carbon-fiber-reinforced composite material of the present invention is preferably 0.001% by weight or more and 35% by weight or less relative to the entire composition. When the amount of the polyvinyl acetal resin is within the range, the mechanical strength of the resulting carbon-fiber-reinforced composite material can be sufficiently enhanced.

The polyvinyl acetal resin can be typically produced by acetalizing a polyvinyl alcohol resin.

The method for the acetalization is not limited and may be a conventionally known method. Examples of the method include one in which an aldehyde is added to a solution of a polyvinyl alcohol resin in water, an alcohol, a water/alcohol mixture, or dimethylsulfoxide (DMSO) in the presence of an acid catalyst.

When the polyvinyl acetal resin includes a structural unit containing an acid-modified group, the polyvinyl acetal resin may be produced by a method of acetalizing a polyvinyl alcohol resin including a structural unit containing an acid-modified group, or a method of acetalizing an unmodified polyvinyl alcohol and post-modifying the obtained polyvinyl acetal resin.

Examples of the aldehyde include linear, branched, cyclic saturated, cyclic unsaturated, or aromatic aldehydes having a carbon number of 1 to 19. Specific examples thereof include formaldehyde, acetaldehyde, propionyl aldehyde, n-butyraldehyde, isobutyraldehyde, tert-butyraldehyde, benzaldehyde, and cyclohexylaldehyde. Each of the aldehydes may be used alone or in combination of two or more. The aldehyde is preferably an aldehyde other than formaldehyde and cyclic saturated, cyclic unsaturated, or aromatic aldehydes. Acetaldehyde and n-butyraldehyde are particularly preferred.

The amount of the aldehyde to be added can be appropriately determined according to the acetal group content of the aimed polyvinyl acetal resin. In particular, the amount is preferably 50 mol% or more and 95 mol% or less, more preferably 55 mol% or more and 90 mol% or less relative to 100 mol% of the polyvinyl alcohol resin. The amount in the range is preferred because the acetalization reaction can be efficiently carried out and unreacted aldehyde can be easily removed.

The polyvinyl alcohol resin may be, for example, a conventionally known polyvinyl alcohol resin such as a resin produced by saponifying polyvinyl acetate with an alkali, an acid, aqueous ammonia, or the like.

The polyvinyl alcohol resin may be completely saponified, but is not necessarily completely saponified and may be a partially saponified polyvinyl alcohol resin as long as the polyvinyl alcohol resin has at least one unit having a hydroxy group diad for a meso or a racemo position in at least one position of the main chain. Examples of other polyvinyl alcohol resins that can be used include copolymers of vinyl alcohol and a monomer copolymerizable with vinyl alcohol, such as ethylene-vinyl alcohol copolymer resins and partially saponified ethylene-vinyl alcohol copolymer resins.

Examples of the polyvinyl acetate resin include ethylene-vinyl acetate copolymers.

The polyvinyl acetal resin constituting the carbon-fiber-reinforced composite material of the present invention is preferably an acetalized product of a polyvinyl alcohol resin having a degree of saponification of 75 mol% or greater. The degree of saponification is more preferably 85 mol% or more and 99.5 mol% or less.

The holding time after reaction is preferably 1.5 hours or longer, more preferably 2 hours or longer, although it depends on other conditions. The above holding time allows the acetalization reaction to proceed sufficiently.

The holding temperature after reaction is preferably 15°C or higher, more preferably 20°C or higher. The above holding temperature allows the acetalization reaction to proceed sufficiently.

The polyvinyl alcohol resin usually contains a carboxylic acid salt that is a basic component generated during saponification. The carboxylic acid salt is preferably removed by washing or neutralized before use. Removal by washing or neutralization of the carboxylic acid salt can effectively reduce the condensation reaction of the aldehyde catalyzed under basic conditions, thus further reducing resin discoloration.

The washing in the washing step may be performed by a method including extracting the basic component with a solvent, a method including dissolving the resin in a good solvent and then adding a poor solvent to reprecipitate the resin alone, or a method including adding an adsorbent to a solution containing the polyvinyl alcohol resin to remove the basic component by adsorption.

Examples of a neutralizer used in the neutralizing step include mineral acids such as hydrochloric acid, sulfuric acid, nitric acid, and phosphoric acid, inorganic acids such as carbonic acid, carboxylic acids such as formic acid, acetic acid, propionic acid, butyric acid, and hexanoic acid, aliphatic sulfonic acids such as methanesulfonic acid and ethanesulfonic acid, aromatic sulfonic acids such as benzenesulfonic acid, and phenols such as phenol.

The carbon-fiber-reinforced composite material of the present invention contains carbon fibers.

Example of the carbon fibers include PAN carbon fibers, pitch carbon fibers, cellulose carbon fibers, and vapor-grown carbon fibers.

Usable carbon fibers include those in the form of twisted, untwisted, or never-twisted yarn. In twisted yarn, the alignment of the filaments constituting the carbon fibers is not parallel, which may decrease the mechanical properties of the resulting carbon-fiber-reinforced composite material. Thus, untwisted yarn or never-twisted yarn, which provides a good balance between the moldability and strength properties of the carbon-fiber-reinforced composite material, is preferably used.

To improve the adhesiveness to the matrix resin, the carbon fibers may be subjected to oxidation treatment for introduction of oxygen-containing functional groups. Examples of the oxidation treatment include gas phase oxidation, liquid phase oxidation, and liquid phase electrolytic oxidation. Preferred is liquid phase electrolytic oxidation because it provides high productivity and allows treatment with less variation.

The carbon fibers preferably have a single-fiber fineness of 0.2 to 2.0 dtex, more preferably 0.4 to 1.8 dtex. When the single-fiber fineness is 0.2 dtex or greater, the carbon fibers are less susceptible to damage due to contact with guide rollers during twisting, as well as to similar damage during the resin composition impregnating step. When the single-fiber fineness is 2.0 dtex or less, the carbon fibers can be sufficiently impregnated with the resin composition, resulting in improved fatigue resistance. For the same reasons as above, the carbon fibers preferably have a fineness of 50 to 1,800 tex.

The number of filaments per fiber bundle of the carbon fibers is preferably 2,500 to 100,000. With fewer than 2,500 filaments, meandering of the fiber arrangement tends to occur, which tends to decrease the strength. With more than 100,000 filaments, impregnation with the resin during production or molding of the prepreg may be difficult. The number of filaments is more preferably 2,800 to 80,000.

The carbon fibers preferably have an average fiber diameter of 2 um or greater, more preferably 3 um or greater, while preferably 30 um or less, more preferably 26 um or less.

The carbon fibers preferably have an average fiber length of 2 mm or greater, more preferably 4 mm or greater, while preferably 100 mm or less, more preferably 80 mm or lower.

The carbon fibers may be in any form. Examples include a fiber form and a woven fabric sheet form, a knitted fabric sheet form, and a non-woven fabric sheet form.

When the carbon fibers are in a sheet form, the fibers preferably have a weight per unit area of 100 g/m² or greater, more preferably 350 g/m² or greater, while preferably 1,000 g/m² or less, more preferably 650 g/m² or less.

The carbon fibers preferably have a density of 1.6 g/cm³ or greater and 2.0 g/cm³ or less.

The amount of the carbon fibers in the carbon-fiber-reinforced composite material of the present invention is preferably 35% by weight or more and 100% by weight or less. When the amount of the carbon fibers is within the range, the mechanical strength of the resulting carbon-fiber-reinforced composite material can be sufficiently enhanced.

The amount of the carbon fibers is preferably 55 to 3,685 parts by weight relative to 100 parts by weight of the epoxy resin.

The carbon-fiber-reinforced composite material of the present invention contains an epoxy resin.

With the epoxy resin contained, crosslinking can be performed by energy application such as heating, leading to high adhesiveness.

Examples of the epoxy resin include monofunctional epoxy compounds and polyfunctional epoxy compounds such as bifunctional epoxy compounds and tri- or higher functional epoxy compounds. The epoxy resin preferably contains a monofunctional epoxy compound and a bifunctional epoxy compound.

Examples of the monofunctional epoxy compounds include glycidyl group-containing (meth)acrylates, aliphatic epoxy resins, and aromatic epoxy resins. In particular, the epoxy resin preferably contains a glycidyl group-containing (meth)acrylate.

Examples of the glycidyl group-containing (meth)acrylate include glycidyl (meth)acrylate, 2-hydroxyethyl (meth)acrylate glycidyl ether, 2-hydroxypropyl (meth)acrylate glycidyl ether, 3-hydroxypropyl (meth)acrylate glycidyl ether, 4-hydroxybutyl (meth)acrylate glycidyl ether, and polyethylene glycol-polypropylene glycol (meth)acrylate glycidyl ether.

Examples of the aliphatic epoxy resins include glycidyl ethers of aliphatic alcohols such as butyl glycidyl ether and lauryl glycidyl ether.

Examples of the aromatic epoxy resins include phenyl glycidyl ether and 4-t-butylphenyl glycidyl ether.

Preferred among these are glycidyl group-containing (meth)acrylates and aromatic epoxy resins.

Examples of the bifunctional epoxy compounds include: bifunctional aromatic epoxy resins such as phenol novolac epoxy resins, bisphenol A epoxy resins, bisphenol F epoxy resins, bisphenol S epoxy resins, alkylphenol epoxy resins, resorcin epoxy resins, and bifunctional naphthalene epoxy resins; bifunctional alicyclic epoxy resins such as dicyclopentadiene dimethanol diglycidyl ether; polyalkylene glycol diglycidyl ethers such as polypropylene glycol diglycidyl ether and polyethylene glycol diglycidyl ether; bifunctional glycidyl ester epoxy resins such as diglycidyl phthalate, diglycidyl tetrahydrophthalate, and dimer acid diglycidyl esters; bifunctional glycidyl amine epoxy resins such as diglycidyl aniline and diglycidyl toluidine; bifunctional heterocyclic epoxy resins; bifunctional diarylsulfone epoxy resins; hydroquinone epoxy resins such as hydroquinone diglycidyl ether, 2,5-di-tert-butylhydroquinone diglycidyl ether, and resorcin diglycidyl ether; bifunctional alkylene glycidyl ether compounds such as butanediol diglycidyl ether, butenediol diglycidyl ether, and butynediol diglycidyl ether; bifunctional glycidyl group-containing hydantoin compounds such as 1,3-diglycidyl-5,5-dialkylhydantoin and 1-glycidyl-3-(glycidoxyalkyl)-5,5-dialkylhydantoin; bifunctional glycidyl group-containing siloxanes such as 1,3-bis(3-glycidoxypropyl)-1,1,3,3-tetramethyldisiloxane and α,β-bis(3-glycidoxypropyl)polydimethylsiloxane; neopentyl glycol diglycidyl ether; and their modified products. The bifunctional epoxy compounds may be used alone or in combination of two or more thereof. From the standpoint of reactivity and workability, preferred among these are bifunctional alicyclic epoxy resins such as dicyclopentadiene dimethanol diglycidyl ether and polyalkylene glycol diglycidyl ethers such as polypropylene glycol diglycidyl ether.

Examples of the tri- or higher functional epoxy compounds include: tri- or higher functional aromatic epoxy resins such as tri- or higher functional phenol novolac epoxy resins; tri- or higher functional alicyclic epoxy resins; tri- or higher functional glycidyl ester epoxy resins; tri- or higher functional glycidyl amine epoxy resins such as tetraglycidyl diaminodiphenylmethane, triglycidyl-p-aminophenylmethane, triglycidyl-m-aminophenylmethane, and tetraglycidyl-m-xylylenediamine; tri- or higher functional heterocyclic epoxy resins; tri- or higher functional diaryl sulfone epoxy resins; tri- or higher functional alkylene glycidyl ether compounds such as glycerol triglycidyl ether, trimethylolpropane triglycidyl ether, and pentaerythritol tetraglycidyl ether; tri- or higher functional glycidyl group-containing hydantoin compounds; tri- or higher functional glycidyl group-containing siloxanes; and their modified products. These tri- or higher functional epoxy resins may be used alone or in combination of two or more thereof.

The lower limit of the amount of the epoxy resin in the carbon-fiber-reinforced composite material of the present invention is preferably 3% by weight, more preferably 6.5% by weight, and the upper limit thereof is preferably 66% by weight, more preferably 56% by weight.

The lower limit of the epoxy equivalent amount (molecular weight per epoxy group) of the epoxy resin is preferably 100, and the upper limit thereof is preferably 5, 000 .

The lower limit of the molecular weight of the epoxy resin is preferably 100, and the upper limit thereof is preferably 70,000.

In the carbon-fiber-reinforced composite material of the present invention, the lower limit of the ratio of the amount of the polyvinyl acetal resin to the amount of the epoxy resin (amount of polyvinyl acetal resin/amount of epoxy resin) is preferably 0.0001, more preferably 0.001, and the upper limit thereof is preferably 0.4, more preferably 0.35.

The carbon-fiber-reinforced composite material of the present invention contains a curing agent.

Examples of the curing agent include phenol curing agents, thiol curing agents, amine curing agents, imidazole curing agents, acid anhydride curing agents, cyanate curing agents, and active ester curing agents. Preferred among these are amine curing agents. The curing agent is preferably a nitrogen-containing compound.

Examples of the amine curing agents include trimethylamine, triethylamine, N,N-dimethylpiperazine, triethylenediamine, benzyl dimethylamine, 2-(dimethylaminomethyl)phenol, 2,4,6-tris(dimethylaminomethyl)phenol, 1,8-diazabicyclo(5.4.0)-undecene-7, and 1,5-diazabicyclo(4.3.0)-nonene-5.

Examples of the imidazole curing agents include imidazole, 2-methylimidazole, 1,2-dimethylimidazole, 2-ethyl-4-methylimidazole, 2-undecylimidazole, 2-heptadecylimidazole, 2-phenylimidazole, 2-phenyl-4-methylimidazole, 1-benzylimidazole, 1-benzyl-2-phenylimidazole, and 1-cyanoethyl-2-methylimidazole.

The lower limit of the amount of the curing agent in the carbon-fiber-reinforced composite material of the present invention is preferably 0.5 parts by weight, more preferably 1.0 parts by weight, and the upper limit thereof is preferably 100 parts by weight, more preferably 50 parts by weight, relative to 100 parts by weight of the epoxy resin.

The amount of the curing agent in the carbon-fiber-reinforced composite material of the present invention is preferably 0.015 to 70% by weight.

The carbon-fiber-reinforced composite material of the present invention may further contain a curing accelerator and/or an organic solvent.

Examples of the curing accelerator include phosphorous compounds, amine compounds, and organometallic compounds.

The lower limit of the amount of the curing accelerator in the carbon-fiber-reinforced composite material of the present invention is preferably 0.1 parts by weight, more preferably 0.5 parts by weight, and the upper limit thereof is preferably 30 parts by weight, more preferably 10 parts by weight, relative to 100 parts by weight of the epoxy resin.

Examples of the organic solvent include ketones, alcohols, aromatic hydrocarbons, and esters.

Examples of the ketones include acetone, methyl ethyl ketone, dipropyl ketone, and diisobutyl ketone.

Examples of the alcohols include methanol, ethanol, isopropanol, and butanol.

Examples of the aromatic hydrocarbons include toluene and xylene.

Examples of the esters include methyl propionate, ethyl propionate, butyl propionate, methyl butanoate, ethyl butanoate, butyl butanoate, methyl pentanoate, ethyl pentanoate, butyl pentanoate, methyl hexanoate, ethyl hexanoate, butyl hexanoate, 2-ethylhexyl acetate, and 2-ethylhexyl butyrate.

Also usable are methyl cellosolve, ethyl cellosolve, butyl cellosolve, terpineol, dihydroterpineol, butyl cellosolve acetate, butyl carbitol acetate, terpineol acetate, and dihydroterpineol acetate.

The upper limit of the amount of the organic solvent in the carbon-fiber-reinforced composite material of the present invention is preferably 5.0% by weight, particularly preferably 0% by weight.

The carbon-fiber-reinforced composite material of the present invention may contain other resins such as acrylic resins or ethylcellulose as long as the effects of the present invention are not impaired. In such a case, the amount of other resins is preferably 10% by weight or less.

The carbon-fiber-reinforced composite material of the present invention may further contain known additives such as tackifier resins, adhesion modifiers, emulsifiers, antioxidants, softeners, fillers, pigments, dyes, silane coupling agents, oxidation inhibitors, surfactants, and waxes, as long as the effects of the present invention are not impaired.

The method for producing the carbon-fiber-reinforced composite material of the present invention is not limited. For example, it can be produced by a method for producing a carbon-fiber-reinforced composite material, including at least the steps of: forming a resin composition containing an epoxy resin, a curing agent, and a polyvinyl acetal resin; and forming a composite of the resin composition with carbon fibers, the polyvinyl acetal resin including structural units represented by the formula (1), each R¹ in the formula (1) being an alkyl group having a carbon number of 1 or greater.

In the method for producing a carbon-fiber-reinforced composite material of the present invention, the structures of the epoxy resin, the curing agent, and the polyvinyl acetal resin, as well as the structural units of the formula (1) in the polyvinyl acetal resin are the same as in the carbon-fiber-reinforced composite material of the present invention, and thus the description thereof is omitted.

The step of producing a resin composition is performed, for example, by mixing the epoxy resin, the curing agent, the polyvinyl acetal resin, and optionally various additives with any of various mixers such as a ball mill, a blender mill, a triple roll mill, a disperser, or a planetary mixer.

In the step of producing a resin composition, the resin composition may be produced by adding the curing agent after mixing the epoxy resin and the polyvinyl acetal resin, or by adding the epoxy resin, the curing agent, and the polyvinyl acetal resin simultaneously.

Examples of the method for forming a composite of the resin composition with the carbon fibers include a method of impregnating the carbon fibers with the resin composition. Specific examples include an autoclave method, a press method, a hand lay-up method, a pultrusion method, a filament winding method, an RTM method, a pin winding method, an infusion method, a hot (cold) press method, a spray-up method, and a continuous press method.

The carbon-fiber-reinforced composite material may be used in any application. The carbon-fiber-reinforced material can be used in structural materials for aircraft, as well as in automobile applications, ship applications, sports applications, and other general industry applications such as wind turbines or rolls. The carbon-fiber-reinforced composite material is particularly preferably applied to applications in which a prepreg is used as an intermediate member.

### - Advantageous Effects of Invention

The present invention can provide a carbon-fiber-reinforced composite material having excellent tackiness, excellent compatibility with epoxy resins, and excellent interfacial adhesion while being capable of achieving high mechanical strength, and a method for producing a carbon-fiber-reinforced composite material.

### DESCRIPTION OF EMBODIMENTS

The present invention is more specifically described in the following with reference to, but not limited to, examples.

### (Example 1)

### (Production of polyvinyl acetal resin)

An amount of 2,700 g of pure water was added to 250 g of a polyvinyl alcohol resin having an average degree of polymerization of 300 and a degree of saponification of 99 mol%, and stirred at 90°C for about two hours for dissolution. This solution was cooled to 40°C, and to the solution were added 100 g of hydrochloric acid having a concentration of 35% by weight and 90 g of acetaldehyde to perform acetalization, whereby a reaction product was precipitated. Thereafter, the acetalization was completed at 40°C, followed by neutralization, washing with water, and drying by conventional methods. Thus, white powder of a polyvinyl acetal resin was obtained.

The obtained polyvinyl acetal resin was dissolved in DMSO-d₆ at a concentration of 10% by weight, and ¹³C-NMR was performed to measure the alkyl acetal group content (degree of acetoacetalization), the hydroxy group content, and the acetyl group content.

### (Production of carbon-fiber-reinforced composite material [prepreg])

To 100 parts by weight of a bisphenol A epoxy resin (JER828, available from Japan Epoxy Resins Co., Ltd.) were added 6 parts by weight of a curing agent (dicyandiamide) and 10 parts by weight of the obtained polyvinyl acetal resin, and they were mixed using Process Homogenizer (available from SMT) at 15,000 rpm to prepare a resin composition.

Subsequently, the obtained resin composition was impregnated into PAN carbon fibers (available from Toray Industries Inc., T700SC-12000-50C, number of filaments: 12,000, fineness: 800 tex, density: 1.8 g/cm³) by a hand lay-up method and cured by heating at 150°C for one hour, whereby a prepreg was produced. Here, 300 parts by weight of the PAN carbon fibers were used for 100 parts by weight of the bisphenol A epoxy resin.

### (Examples 2 to 10, 17, and 19 to 21 and Comparative Examples 1 to 4)

A polyvinyl acetal resin, a resin composition, and a prepreg were produced as in Example 1 except that a polyvinyl alcohol resin (PVA) and an aldehyde of the types and in the amounts shown in Table 1 were used, and that the resin composition was prepared in accordance with the formulation shown in Table 2.

The polyvinyl acetal resins obtained in Examples 1 and 2 were the same. The polyvinyl acetal resins obtained in Examples 4 and 5 were the same.

In Examples 4 to 6 and 8 and Comparative Example 3, two different aldehydes were used.

In Example 17 and Comparative Example 4, a bisphenol F epoxy resin (NPEF-170, available from Nan Ya Plastics Corporation) was used instead of the bisphenol A epoxy resin (JER828, available from Japan Epoxy Resins Co., Ltd.).

### (Example 11)

### (Production of carboxylic acid-modified polyvinyl acetal resin)

An amount of 100 g of a carboxylic acid-modified polyvinyl alcohol resin was added to 1,000 g of pure water and stirred at a temperature of 90°C for about two hours for dissolution. This solution was cooled to 40°C, and to the solution were added 90 g of hydrochloric acid (concentration: 35% by weight) and 90 g of acetaldehyde. The solution temperature was cooled to 10°C, and this temperature was maintained to perform acetalization reaction. Thereafter, the solution was held at 40°C for three hours to complete the reaction, followed by neutralization, washing with water, and drying by conventional methods. Thus, white powder of a carboxylic acid-modified polyvinyl acetal resin was obtained.

The carboxylic acid-modified polyvinyl alcohol resin included a carboxy group-containing structural unit represented by the formula (4-1) (wherein R² is a single bond, R³ is a methylene group, and X¹ and X² are hydrogen atoms) and had an average degree of polymerization of 400, a degree of saponification of 99.0 mol%, and an acid-modified group content of 0.7 mol%. Here, the single bond means an alkylene group having a carbon number of 0.

A resin composition and a prepreg were obtained as in Example 1 except that the obtained carboxylic acid-modified polyvinyl acetal resin was used.

### (Example 12)

A carboxylic acid-modified polyvinyl acetal resin, a resin composition, and a prepreg were produced as in Example 11 except that in "Production of carbon-fiber-reinforced composite material [prepreg]", the amount of the polyvinyl acetal resin added was 2 parts by weight.

### (Example 13)

A carboxylic acid-modified polyvinyl acetal resin, a resin composition, and a prepreg were produced as in Example 11 except that the carboxylic acid-modified polyvinyl alcohol resin used included a carboxy group-containing structural unit represented by the formula (4-1) (wherein R² is a single bond, R³ is a methylene group, and X¹ and X² are hydrogen atoms) and had an average degree of polymerization of 400, a degree of saponification of 99.0 mol%, and an acid-modified group content of 2.0 mol%.

### (Example 14)

A carboxylic acid-modified polyvinyl acetal resin, a resin composition, and a prepreg were produced as in Example 11 except that the carboxylic acid-modified polyvinyl alcohol resin used included a carboxy group-containing structural unit represented by the formula (4-1) (wherein R² is a single bond, R³ is a methylene group, and X¹ and X² are hydrogen atoms) and had an average degree of polymerization of 600, a degree of saponification of 99.0 mol%, and an acid-modified group content of 1.0 mol%, and that the amount of acetaldehyde added was 110 g.

### (Example 15)

### (Production of sulfonic acid-modified polyvinyl acetal resin)

An amount of 100 g of a sulfonic acid-modified polyvinyl alcohol resin was added to 1,000 g of pure water and stirred at a temperature of 90°C for about two hours for dissolution. This solution was cooled to 40°C, and to the solution were added 90 g of hydrochloric acid (concentration: 35% by weight) and 90 g of acetaldehyde. The solution temperature was cooled to 10°C, and this temperature was maintained to perform acetalization reaction. Thereafter, the solution was held at 40°C for three hours to complete the reaction, followed by neutralization, washing with water, and drying by conventional methods. Thus, white powder of a sulfonic acid-modified polyvinyl acetal resin was obtained.

The sulfonic acid-modified polyvinyl alcohol resin had a structure in which a sulfonic acid group was directly bonded to a carbon atom of the main chain, and had an average degree of polymerization of 300, a degree of saponification of 99.0 mol%, and an acid-modified group content of 0.7 mol%.

A resin composition and a prepreg were obtained as in Example 1 except that the obtained sulfonic acid-modified polyvinyl acetal resin was used.

### (Example 16)

A carboxylic acid-modified polyvinyl acetal resin, a resin composition, and a prepreg were produced as in Example 11 except that the carboxylic acid-modified polyvinyl alcohol resin used included a carboxy group-containing structural unit represented by the formula (4-1) (wherein R² is a single bond, R³ is a methylene group, and X¹ and X² are hydrogen atoms) and had an average degree of polymerization of 2,500, a degree of saponification of 99.0 mol%, and an acid-modified group content of 1.0 mol%, and that 38 g of acetaldehyde and 110 g of butyraldehyde were added instead of 90 g of acetaldehyde.

### (Example 18)

A carboxylic acid-modified polyvinyl acetal resin, a resin composition, and a prepreg were produced as in Example 11 except that in "Production of carbon-fiber-reinforced composite material [prepreg]", a bisphenol F epoxy resin (NPEF-170, available from Nan Ya Plastics Corporation) was used instead of the bisphenol A epoxy resin (JER828, available from Japan Epoxy Resins Co., Ltd.).

### (Evaluation)

The polyvinyl acetal resins, resin compositions, and prepregs obtained in the examples and the comparative examples were evaluated as follows. Tables 1 and 2 show the results.

### (1) Measurement of glass transition temperature (Tg)

The glass transition temperature of the obtained polyvinyl acetal resins was measured using a differential scanning calorimeter (DSC) at a temperature increase rate of 10°C/min.

### (2) Tensile strain

The obtained resin compositions were cured by heating at 150°C for one hour, whereby resin cured plates were produced. Dumbbell specimens (JIS K7161-2-1B type) were cut out from the plates and used to measure the tensile strain using a universal tester (available from Instron) under the following conditions.
Test conditions: JIS K 7161-2
Test rate: 1 mm/min
Gripping distance: 115 mm

High tensile strain of the resin composition allows the prepreg formed using the composition to achieve similarly high tensile train.

### (3) Epoxy resin compatibility

Each of the obtained polyvinyl acetal resins (10 parts by weight) was added to 90 parts by weight of the epoxy resin used in "Production of carbon-fiber-reinforced composite material [prepreg]" and heated at 150°C for dissolution, whereby an evaluation sample was produced.

The produced sample was left to cool to room temperature, and left to stand still at room temperature for 24 hours. In this process, the appearance of the sample was observed at the following three points in time: at 150°C, at 70°C during cooling, and after standing still at room temperature for 24 hours. The presence or absence of phase separation was determined by whether the solution was clear or turbid, and evaluated in accordance with the following criteria.
∘∘ (Excellent): The compatibility was good and the solution was clear at any of 150°C, 70°C, and room temperature.
∘ (Good): No phase separation was observed at 150°C nor at 70°C, but the solution was turbid at room temperature.
Δ (Fair): No separation was observed at 150°C, but the solution was turbid at 70°C and room temperature.
× (Poor): No dissolution occurred at 150°C, and the solution was turbid.

### (4) Adhesiveness (interfacial shear strength measurement)

The polyvinyl acetal-containing resin compositions obtained in the examples and the comparative examples were dropped onto carbon fibers and cured by heating at 150°C for one hour, whereby measurement samples were produced. The carbon fiber/resin interfacial shear strength of the produced samples was measured using Evaluation Equipment For Interfacial Property Of Composite Material (available from Tohei Sangyo Co., Ltd., model HM410) by a microdroplet method (pull-out speed: 0.12 mm/min).

### (5) Toughness

Five sheets of each of the obtained prepreg were stacked. A hole was drilled into the stack, and the opening was observed for the appearance and evaluated in accordance with the following criteria.
∘∘ (Excellent): No delamination occurred at all.
∘ (Good): Separation occurred at only one sheet.
× (Poor): Separation occurred at two or more sheets.

### (6) Tackiness

The obtained prepregs were evaluated for tackiness by tactile feel.
∘∘ (Excellent): The prepreg had appropriate tackiness and excellent handleability.
∘ (Good): The prepreg had slightly excessive or slightly insufficient tackiness, but had no problem in the handleability.
× (Poor): The prepreg had significantly excessive or significantly insufficient tackiness and has a problem in the handleability.

**[Table 1]**

| | PVA | | Acetalization step | | Polyvinyl acetal resin | | | | | | | | | | |
|---|---|---|---|---|---|---|---|---|---|---|---|---|---|---|---|
| | Average degree of polymerization | Degree of saponification (mol%) | Aldehyde type | Aldehyde addition amount (g) | R¹ type | Average degree of polymerization | Degree of acetoacetalization (mol%) | Degree of butyralization (mol%) | Alkyl acetal group content (mol%) | Other acetal group content* (mol%) | Hydroxy group content (mol%) | Acetyl group content (mol%) | Acid modification type | Acid-modified group content (mol%) | Tg (°C) |
| Example 1 | 300 | 99 | Acetaldehyde | 90 | CH₃ | 300 | 74 | 0 | 74 | 0 | 25 | 1 | - | 0 | 106 |
| Example 2 | 300 | 99 | Acetaldehyde | 90 | CH₃ | 300 | 74 | 0 | 74 | 0 | 25 | 1 | - | 0 | 106 |
| Example 3 | 2000 | 99 | Acetaldehyde | 110 | CH₃ | 2000 | 74 | 0 | 74 | 0 | 25 | 1 | - | 0 | 110 |
| Example 4 | 300 | 99 | Acetaldehyde | 30 | CH₃ | 300 | 20 | 47 | 67 | 0 | 32 | 1 | - | 0 | 75 |
| | | | Butyraldehyde | 110 | C₃H₇ | | | | | | | | | | |
| Example 5 | 300 | 99 | Acetaldehyde | 30 | CH₃ | 300 | 20 | 47 | 67 | 0 | 32 | 1 | - | 0 | 75 |
| | | | Butyraldehyde | 110 | C₃H₇ | | | | | | | | | | |
| Example 6 | 300 | 99 | Acetaldehyde | 38 | CH₃ | 300 | 25 | 47 | 72 | 0 | 27 | 1 | - | 0 | 90 |
| | | | Butyraldehyde | 110 | C₃H₇ | | | | | | | | | | |
| Example 7 | 2300 | 99 | Acetaldehyde | 115 | CH₃ | 2300 | 74 | 0 | 74 | 0 | 25 | 1 | - | 0 | 110 |
| Example 8 | 2300 | 89 | Acetaldehyde | 20 | CH₃ | 2300 | 10 | 52 | 62 | 0 | 27 | 11 | - | 0 | 76 |
| | | | Butyraldehyde | 115 | C₃H₇ | | | | | | | | | | |
| Example 9 | 400 | 99 | Acetaldehyde | 80 | CH₃ | 400 | 59 | 0 | 59 | 0 | 40 | 1 | - | 0 | 107 |
| Example 10 | 800 | 99 | Acetaldehyde | 93 | CH₃ | 800 | 69 | 0 | 69 | 0 | 30 | 1 | - | 0 | 110 |
| Example 11 | 400 | 99 | Acetaldehyde | 90 | CH₃ | 400 | 72.3 | 0 | 72.3 | 0 | 26 | 1 | Carboxy group | 0.7 | 109 |
| Example 12 | 400 | 99 | Acetaldehyde | 90 | CH₃ | 400 | 72.3 | 0 | 72.3 | 0 | 26 | 1 | Carboxy group | 0.7 | 109 |
| Example 13 | 400 | 99 | Acetaldehyde | 90 | CH₃ | 400 | 71 | 0 | 71 | 0 | 25 | 1 | Carboxy group | 2 | 109 |
| Example 14 | 600 | 99 | Acetaldehyde | 110 | CH₃ | 600 | 73 | 0 | 73 | 0 | 25 | 1 | Carboxy group | 1 | 100 |
| Example 15 | 300 | 99 | Acetaldehyde | 90 | CH₃ | 300 | 72.3 | 0 | 72.3 | 0 | 26 | 1 | Sulfonic acid group | 0.7 | 80 |
| Example 16 | 2500 | 99 | Acetaldehyde | 38 | CH₃ | 2500 | 25 | 47 | 72 | 0 | 26 | 1 | Carboxy group | 1 | 86 |
| | | | Butyraldehyde | 110 | C₃H₇ | | | | | | | | | | |
| Example 17 | 300 | 99 | Acetaldehyde | 90 | CH₃ | 300 | 74 | 0 | 74 | 0 | 25 | 1 | - | 0 | 106 |
| Example 18 | 400 | 99 | Acetaldehyde | 90 | CH₃ | 400 | 72.3 | 0 | 72.3 | 0 | 26 | 1 | Carboxy group | 0.7 | 109 |
| Example 19 | 300 | 89 | Acetaldehyde | 82 | CH₃ | 300 | 64 | 0 | 64 | 0 | 25 | 11 | - | 0 | 94 |
| Example 20 | 300 | 99 | Acetaldehyde | 90 | CH₃ | 300 | 79 | 0 | 79 | 0 | 20 | 1 | - | 0 | 105 |
| Example 21 | 300 | 81 | Acetaldehyde | 75 | CH₃ | 300 | 55 | 0 | 55 | 0 | 25 | 19 | - | 0 | 86 |
| Comparative Example 1 | 800 | 93 | Formaldehyde | 83 | H | 800 | 0 | 0 | 0 | 86.5 | 6.5 | 7 | - | 0 | 118.0 |
| Comparative Example 2 | 600 | 99 | Benzaldehyde | 200 | C₆H₅ | 600 | - | 0 | 0 | 59 | 40 | 1 | - | 0 | 120 |
| Comparative Example 3 | 800 | 88 | Benzaldehyde | 93 | C₆H₅ | 800 | 0 | 0 | 47 | 25 | 27 | 1 | - | 0 | 117 |
| | | | Formaldehyde | 50 | H | | | | | | | | | | |
| Comparative Example 4 | 300 | 99 | Butyraldehyde | 165 | C₃H₇ | 300 | - | 70 | 70 | 0 | 29 | 1 | - | 0 | 68 |

| | | | | | | | | | | | | | | | |
|---|---|---|---|---|---|---|---|---|---|---|---|---|---|---|---|
| *: The amount of acetal groups other than the structural units represented by the formula (1) CH₃ | | | | | | | | | | | | | | | |

**[Table 2]**

| | Epoxy resin | Evaluation (resin composition) | | | Prepreg formulation (parts by weight) | | | | Evaluation (prepreg) | |
|---|---|---|---|---|---|---|---|---|---|---|
| | | Tensile strain (%) | Epoxy resin compatibility | Adhesiveness (Interfacial shear strength: MPa) | Resin composition formulation | | | Carbon fibers | Toughness | Tackiness |
| | | | | | Epoxy resin | Curing agent | Polyvinyl acetal resin | | | |
| Example 1 | Bisphenol A epoxy resin | 6.72 | ○○ | 62.3 | 100 | 6 | 10 | 300 | ○ | ○○ |
| Example 2 | | 6.72 | ○○ | 62.3 | 100 | 6 | 2 | 300 | Δ | ○○ |
| Example 3 | | 7.28 | ○○ | 61.2 | 100 | 6 | 10 | 300 | ○○ | ○○ |
| Example 4 | | 4.67 | Δ | 69.3 | 100 | 6 | 5 | 300 | ○○ | ○○ |
| Example 5 | | 4.67 | Δ | 69.3 | 100 | 6 | 2 | 300 | ○ | ○○ |
| Example 6 | | 5.21 | Δ | 70.8 | 100 | 6 | 20 | 300 | ○○ | ○○ |
| Example 7 | | 7.36 | ○○ | 61.9 | 100 | 6 | 10 | 300 | ○○ | ○○ |
| Example 8 | | 6.10 | ○ | 63.5 | 100 | 6 | 5 | 300 | ○○ | ○○ |
| Example 9 | | 6.40 | ○ | 78.3 | 100 | 6 | 10 | 300 | ○○ | ○ |
| Example 10 | | 6.70 | ○○ | 74.4 | 100 | 6 | 10 | 300 | ○○ | ○ |
| Example 11 | | 7.28 | ○○ | 78.1 | 100 | 6 | 10 | 300 | ○○ | ○○ |
| Example 12 | | 7.28 | ○○ | 78.1 | 100 | 6 | 2 | 300 | ○○ | ○○ |
| Example 13 | | 7.51 | ○○ | 81.3 | 100 | 6 | 10 | 300 | ○○ | ○○ |
| Example 14 | | 790 | ○○ | 76.2 | 100 | 6 | 10 | 300 | ○○ | ○○ |
| Example 15 | | 6.98 | ○ | 76.2 | 100 | 6 | 10 | 300 | ○○ | ○○ |
| Example 16 | | 6.10 | ○ | 71.1 | 100 | 6 | 10 | 300 | ○○ | ○○ |
| Example 17 | Bisphenol F epoxy resin | 660 | ○ | 60.4 | 100 | 6 | 10 | 300 | ○ | ○○ |
| Example 18 | | 7.10 | ○○ | 67.5 | 100 | 6 | 10 | 300 | ○○ | ○○ |
| Example 19 | Bisphenol A Epoxy resin | 705 | ○○ | 61.5 | 100 | 6 | 10 | 300 | ○○ | ○○ |
| Example 20 | | 660 | ○○ | 61.5 | 100 | 6 | 10 | 300 | ○○ | ○○ |
| Example 21 | | 705 | ○○ | 60.8 | 100 | 6 | 10 | 300 | ○○ | ○○ |
| Comparative Example 1 | Bisphenol A epoxy resin | 6.61 | ○○ | 60.4 | 100 | 6 | 5 | 300 | × | ○ |
| Comparative Example 2 | | 230 | × | 58.1 | 100 | 6 | 5 | 300 | × | × |
| Comparative Example 3 | | 2.45 | × | 58.9 | 100 | 6 | 5 | 300 | × | ○ |
| Comparative Example 4 | Bisphenol F Epoxy resin | 1.86 | × | 60.7 | 100 | 6 | 5 | 300 | × | × |

The present invention can provide a carbon-fiber-reinforced composite material having excellent tackiness, excellent compatibility with epoxy resins, and excellent interfacial adhesion while being capable of achieving high mechanical strength.

## Claims

1. A carbon-fiber-reinforced composite material comprising:
carbon fibers;
an epoxy resin;
a curing agent; and
a polyvinyl acetal resin,
the polyvinyl acetal resin including structural units represented by the following formula (1),
each R¹ in the formula (1) being an alkyl group having a carbon number of 1 or greater: 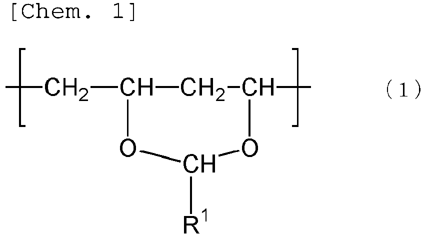 wherein R¹s may be the same as or different from each other.

2. The carbon-fiber-reinforced composite material according to claim 1,
wherein in the polyvinyl acetal resin, R¹s in the formula (1) comprise an alkyl group having a carbon number of 1 or greater and/or an alkyl group having a carbon number of 3 or greater.

3. The carbon-fiber-reinforced composite material according to claim 1 or 2,
wherein the polyvinyl acetal resin has a hydroxy group content of 15.0 mol% or more and 45.0 mol% or less.

4. The carbon-fiber-reinforced composite material according to any one of claims 1 to 3,
wherein the polyvinyl acetal resin has an average degree of polymerization of 2,500 or less.

5. The carbon-fiber-reinforced composite material according to any one of claims 1 to 4,
wherein the polyvinyl acetal resin has a glass transition temperature of 75°C or higher.

6. The carbon-fiber-reinforced composite material according to any one of claims 1 to 5,
wherein the polyvinyl acetal resin includes a structural unit containing an acid-modified group.

7. The carbon-fiber-reinforced composite material according to claim 6,
wherein in the polyvinyl acetal resin, the structural unit containing an acid-modified group is contained in an amount of 0.01 to 20 mol%.

8. The carbon-fiber-reinforced composite material according to any one of claims 1 to 7,
wherein the polyvinyl acetal resin has a hydroxy group content of 16.0 mol% or more and 45.0 mol% or less.

9. The carbon-fiber-reinforced composite material according to any one of claims 1 to 8,
wherein the polyvinyl acetal resin is contained in an amount of 0.01 parts by weight or more and 40.0 parts by weight or less relative to 100 parts by weight of the epoxy resin.

10. A method for producing a carbon-fiber-reinforced composite material, comprising at least the steps of:
forming a resin composition containing an epoxy resin, a curing agent, and a polyvinyl acetal resin; and
forming a composite of the resin composition with carbon fibers,
the polyvinyl acetal resin including structural units represented by the following formula (1),
R¹s in the formula (1) each being an alkyl group having a carbon number of 1 or greater: 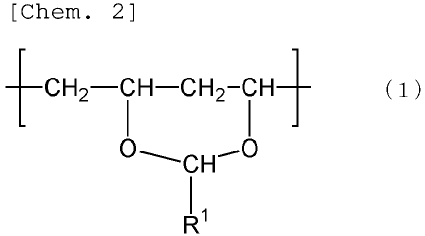 wherein R¹s may be the same as or different from each other.
